# EUROPÄISCHE PATENTSCHRIFT

(11) **EP 1 124 068 B1**
(45) Veröffentlichungstag und Bekanntmachung des Hinweises auf die Patenterteilung: **31.03.2004**
(21) Anmeldenummer: 00127873.8
(22) Anmeldetag: 20.12.2000
(51) Int. Cl.: F16D 13/71

(54) **Axiale Anordnung der Druckeinheit einer Reibungskupplung**
Axial mounting of the pressure unit in a friction clutch
Montage axial de l'unité de pression dans un embrayage à friction

(30) Priorität: 12.02.2000 DE 10006271
(43) Veröffentlichungstag der Anmeldung: 16.08.2001
(73) Patentinhaber: Bayerische Motoren Werke Aktiengesellschaft, 80809 München (DE)
(72) Erfinder: Kröger, Werner, 85764 Oberschleissheim (DE); Letzer, Michael, 85567 Gauting (DE); Andersson, Daniel, 80538 München (DE)

(56) Entgegenhaltungen:
- US-A- 3 773 155
- US-A- 3 815 714
- US-A- 3 822 772
- US-A- 4 141 441
- US-A- 5 135 089
- US-A- 5 950 786

## Beschreibung

Die Erfindung betrifft eine Ein- oder Mehrscheibenkupplung für Schaltgetriebe, umfassend einen mit dem Schwungrad eines Verbrennungsmotors drehfest verbundenen Kupplungskorb, eine mit dem Kupplungskorb drehfest, aber begrenzt axial beweglich verbundene Anpreßplatte und eine Mittnehmerscheibe mit einer Mitnehmemabe, die mit der zum Schwungrad koaxialen Getriebeeingangswelle drehfest, aber begrenzt axial verschiebbar verbunden ist, und mit einem beidseitig mit Reibbelägen versehenen äußeren Umfangsbereich, der zwischen der Anpreßplatte und dem Schwungrad angeordnet ist.

Wenn die Anpreßplatte zum Öffnen der Kupplung von der Mitnehmerscheibe weg bewegt wird, dann können sich die Reibbeläge entspannen, und es kommt zu einer Axialbewegung der Mitnehmemabe auf der Getriebeeingangswelle. Im Idealfall sollte diese Axialbewegung der Mitnehmemabe groß genug sein, daß das Schwungrad auf die Mitnehmerscheibe kein Drehmoment mehr überträgt. In der Praxis ist dieses Ziel aus verschiedenen Gründen aber kaum zu erreichen. So erfordert die Axialverzahnung der Getriebeeingangswelle und der Mitnehmemabe sehr enge Toleranzen. Diese Toleranzen können durch Verschleiß beeinflußt werden. Im übrigen neigt die Mitnehmerscheibe zum Verkippen. Auch kann durch die Axialverschiebung der Mitnehmernabe auf der Getriebeeingangswelle sogenannter Reibrost entstehen. Alle diese Erscheinungen beeinträchtigen die axiale Verschiebbarkeit der Mitnehmemabe auf der Getriebeeingangswelle. Dies kann dazu führen, daß die Mitnehmerscheibe mit ihrem Reibbelag auch nach dem Ausrücken der Anpreßplatte noch am Schwungrad anliegt. Vom Schwungrad wird daher auf die Mitnehmerscheibe ein als Schleppmoment bezeichnetes Rest-Übertragungmoment ausgeübt. Dieses Schleppmoment der Mitnehmerscheibe führt aber zu einer schweren Schaltbarkeit des Getriebes, das bis zum Versagen führen kann. Beim Anfahren kann es auch zu einem unbeabsichtigten Schließen der Kupplung kommen.

Eine Kupplung gemäß dem Oberbegriff des Anspruches 1 ist im US-A-5 135 089 offenbart.

Der Erfindung liegt die Aufgabe zugrunde, die gattungsgemäße Kupplung dahingehend zu verbessern, daß die Mitnehmerscheibe beim Ausrücken der Anpreßplatte zwangsweise vom Schwungrad vollständig abgehoben wird.

Erfindungsgemäß wird die Aufgabe durch die Merkmale des kennzeichnenden Teils des Anspruchs 1 gelöst.

Wenn die Anpreßplatte zum Öffnen der Kupplung vom Schwungrad weg bewegt wird, dann nimmt sie die Mitnehmerscheibe zwangsweise über einen Bruchteil ihrer Axialbewegung mit. Dadurch ist gewährleistet, daß die Reibbeläge der Mitnehmerscheibe weder mit dem Schwungrad noch mit der Anpreßplatte in Berührung stehen, so daß auf die Mitnehmerscheibe keinerlei Drehmoment übertragen wird. Die von der Ausrückbewegung der Anpreßplatte abgeleitete Zwangsbewegung der Mitnehmerscheibe erlaubt größere Toleranzen der Axialverzahnung, und die Funktionssicherheit der Kupplung wird erhöht.

Dem Fachmann sind verschiedene Ausführungsformen einer solchen Getriebekette mit eingeschränktem axialen translatorischen Freiheitsgrad bekannt. Die Getriebekette kann beispielsweise ein in Axialrichtung elastisches Element enthalten. Bei einer Axialbewegung der Anpreßplatte zum Öffnen der Kupplung entspannt sich zunächst das elastische Element, ohne daß sich die Mitnehmerscheibe bewegt. Die Anpreßplatte nimmt die Mitnehmerscheibe erst dann mit, wenn sich das elastische Element vollständig entspannt hat. Eine andere Variante kann darin bestehen, daß die Getriebekette eine Langloch-Verbindung enthält. Das Wesen einer solchen Langloch-Verbindung besteht darin, daß sie eine durch die Länge des Langlochs definierte Relativbewegung der miteinander verbundenen Teile ermöglicht. Die der Mitnehmerscheibe aufgezwungene Axialbewegung ist daher kleiner als diejenige der Anpreßplatte.

Sowohl das elastische Element als auch ein Teil der Langloch-Verbindung kann am Außenring eines auf der Mitnehmemabe angeordneten Drehlagers befestigt sein. Dieses Drehlager ermöglicht eine relative Verdrehung der Anpreßplatte gegenüber der Mitnehmerscheibe. Im Hinblick auf eine möglichst geringe Reibung sollte das Drehlager als Wälzlager ausgebildet sein.

Zwei Ausführungsbeispiele der Erfindung sind in der Zeichnung dargestellt und werden nachfolgend näher erläutert. Es zeigt:
Fig. 1 einen schematischen Axialschnitt einer Kupplung gemäß einer ersten Ausführungsform, wobei in der unteren Hälfte der Darstellung der eingekuppelte Zustand und in der oberen Hälfte der ausgekuppelte Zustand gezeigt ist,
Fig. 2 eine Darstellung ähnlich wie Fig. 1, die aber eine zweite Ausführungsform einer Kupplung zeigt, und
Fig. 3 einen Axialschnitt einer herkömmlichen Einscheibenkupplung für Schaltgetriebe.

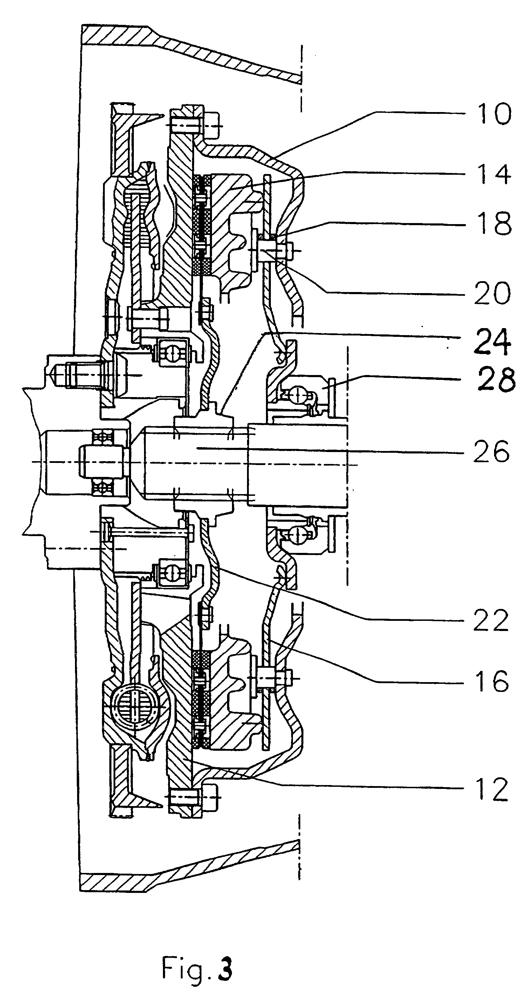

Die in Fig. 3 schematisch dargestellte Einscheibenkupplung dient zur Übertragung des Drehmoments zwischen einem Verbrennungsmotor und einem Schaltgetriebe. Ein Kupplungskorb 10 ist mit einem Schwungrad 12 eines Verbrennungsmotors starr verbunden. Das gezeigte Schwungrad 12 ist als Zweimassenschwungrad ausgebildet, das dazu dient, Drehmomentschwankungen der Kurbelwelle des Verbrennungsmotors auszugleichen. Eine Anpreßplatte 14 ist über mehrere Blattfedern mit dem Kupplungskorb 10 drehfest, aber begrenzt axial bewegbar verbunden. Mit dem Kupplungskorb 10 ist ferner eine Tellerfeder 16 verbunden. Genauer gesagt, der Innenrand der ringförmigen Tellerfeder 16 ist zwischen zwei Drahtringen 18 festgelegt, die mit Bolzen 20 mit dem Kupplungskorb 10 vernietet sind. Die Tellerfeder 16 hat die Aufgabe, die Anpreßplatte 14 gegen eine Mitnehmerscheibe 22 vorzuspannen. Die Mitnehmerscheibe 22 ist mit einer Mitnehmemabe 24 auf einer zum Schwungrad 12 koaxialen Getriebeeingangswelle 26 drehfest, aber begrenzt axial verschiebbar gelagert. Zu diesem Zweck sind die Mitnehmemabe 24 und die Getriebeeingangswelle 26 mit einer Axialverzahnung versehen. Die Mitnehmerscheibe 22 umfaßt einen Ring, der mit einem Flansch der Mitnehmemabe 24 starr verbunden oder einstückig ausgebildet ist. Mit dem Ring der Mitnehmerscheibe 22 sind Belagfedem drehfest verbunden, vorzugsweise vernietet. Auf beiden Seiten dieser Belagfedem sind Reibbeläge angeordnet, die mit diesen vernietet sind. Ein Ausrücklager 28 kann mit dem inneren Umfangsbereich der Tellerfeder 16 in Eingriff gebracht werden, um die Kupplung zu öffnen.

Die vorstehend beschriebene Ausbildung einer Einscheibenkupplung ist herkömmlicher Art, so daß eine weitere Erläuterung entfallen kann.

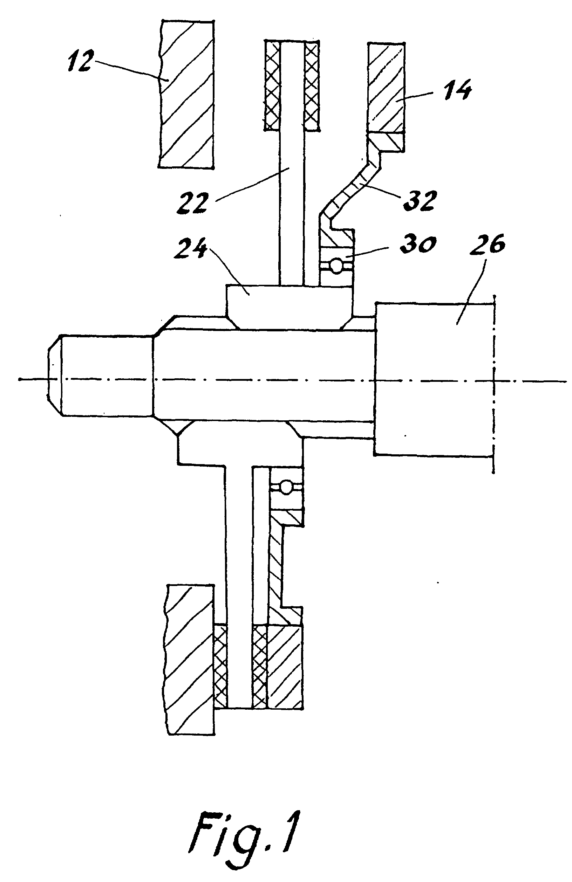

In Fig. 1 ist eine erste Ausführungsform einer erfindungsgemäßen Kupplung in größerem Maßstab dargestellt. Dabei ist in der unteren Hälfte der Darstellung der eingekuppelte und in der oberen Hälfte der ausgekuppelte Zustand gezeigt. Die Mitnehmemabe 24 ist in bekannter Weise auf der Axialverzahnung der Getriebeeingangswelle 26 drehfest, aber axial verschiebbar geführt. Auf der Mitnehmemabe 24 ist der Innenring eines Wälzlagers 30 befestigt, was beispielsweise durch Aufschrumpfen erfolgen kann. Der Außenring des Wälzlagers 30 ist über mehrere in Axialrichtung elastische Verbindungselemente 32 mit der Anpreßplatte 14 verbunden. Die Verbindungselemente 32 sind zur Achse des Wälzlagers 30 vorzugsweise symmetrisch angeordnet. Die Federcharakteristik der Verbindungselemente 32 ist derart, daß ihr axialer Federweg kleiner ist als die Axialbewegung der Anpreßplatte 14 beim Öffnen und Schließen der Kupplung.

Abweichend von dem gezeigten Ausführungsbeispiel könnten die Verbindungselemente 32 statt an der Anpreßplatte 14 auch an einem mit dieser drehfest verbundenen Bauteil befestigt sein.

Wenn die Anpreßplatte 14 zum Schließen der Kupplung in Axialrichtung zum Schwungrad 12 hin bewegt wird, dann nimmt sie die Mitnehmerscheibe 22 über die Verbindungselemente 32 zwangsläufig mit, bis der Reibbelag der Mitnehmerscheibe 22 am Schwungrad 12 zur Anlage gelangt. Die Axialbewegung der Anpreßplatte 14 wird fortgesetzt, bis sie an dem zugekehrten Reibbelag der Mitnehmerscheibe 22 zur Anlage gelangt, wie dies in Fig. 1 unten gezeigt ist. Bei dieser Bewegung der Anpreßplatte 14 gegenüber der axial festen Mitnehmerscheibe 22 werden die elastischen Verbindungselemente 32 verformt.

Wenn die Anpreßplatte 14 zum Öffnen der Kupplung vom Schwungrad 12 weg nach rechts bewegt wird, dann entspannen sich zunächst die elastischen Verbindungselemente 32, während die Mitnehmerscheibe 22 axial fest bleibt. Erst dann, wenn die elastischen Verbindungselemente 32 ihren in der oberen Hälfte von Fig. 1 gezeigten entspannten Zustand erreicht haben, nehmen sie die Mitnehmerscheibe 22 mit. Die Mitnehmerscheibe 22 wird daher von der Anpreßplatte 14 zwangsweise nach rechts bewegt und vom Schwungrad 12 getrennt.

Wie aus der vorstehenden Beschreibung hervorgeht, bewirken die elastischen Verbindungselemente 32 eine Zwangswegführung der Mitnehmerscheibe 22 mit einem Hub, der geringer ist als der Hub der Anpreßplatte 14. Im geöffneten Zustand der Kupplung ist daher gewährleistet, daß die Mitnehmerscheibe 22 mit Ihren Reibbelägen weder am Schwungrad 12 noch an der Anpreßplatte 14 anliegt. Auf die Mitnehmerscheibe 22 kann daher kein Schleppmoment übertragen werden.

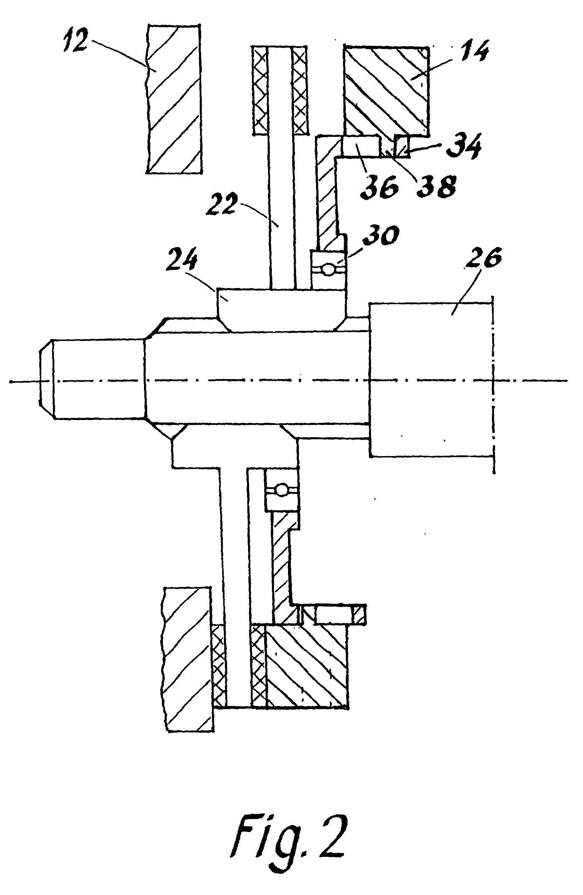

In Fig. 2 der Zeichnung ist eine abgewandelte Kupplung gezeigt, bei der die zwischen der Anpreßplatte 14 und der Mitnehmerscheibe 22 angeordnete Getriebekette mit eingeschränktem translatorischen Freiheitsgrad starre Elemente enthält. Dabei sind die elastischen Verbindungselemente 32 der ersten Ausführungsform jeweils durch eine Langloch-Verbindung ersetzt. Am Außenring des Wälzlagers 30 sind mehrere Winkel 34 befestigt. Die Winkel 34 sind zur Drehachse des Wälzlagers 30 vorzugsweise symmetrisch angeordnet. Der axiale Schenkel jedes Winkels 34 ist mit einem Langloch 36 versehen, in das ein an der Anpreßplatte 14 befestigter radial nach innen ragender Zapfen 38 eingreift. Die Länge des Langlochs 36 verringert um den Durchmesser des Zapfens 38 definiert die mögliche axiale Relativbewegung der Anpreßplatte 14 gegenüber der Mitnehmerscheibe 22. Da der Hub der Anpreßplatte 14 größer ist als diese Relativbewegung, ergibt sich die gleiche Wirkungsweise wie bei der ersten Ausführungsform. Das bedeutet, daß die Mitnehmerscheibe 22 mit der Anpreßplatte 14 derart gekuppelt ist, daß sie zwangsweise einen Teil der Axialbewegung derselben mitmacht. Das Langloch 36 ist so dimensioniert, daß beim Schließen der Kupplung die Anpreßplatte 14 an dem zugeordneten Reibbelag der Mitnehmerscheibe 22 zur Anlage gelangt, bevor der Zapfen 38 am Ende des Langlochs 36 zur Anlage gelangt. Die Mitnehmerscheibe 22 wird daher unmittelbar von der Anpreßplatte 14 an das Schwungrad 12 angepreßt, ohne daß der Kraftfluß über den Zapfen 38 und den Winkel 34 erfolgt. Zum Öffnen der Kupplung wird die Anpreßplatte 14 vom Schwungrad 12 weg nach rechts bewegt, bis der Zapfen 38 das Ende des Langlochs 36 erreicht. Daraufhin wird die Mitnehmerscheibe 22 über den Winkel 34 mitgenommen, so daß ihr Reibbelag vom Schwungrad 12 getrennt wird.

Abweichend von den gezeigten und vorstehend beschriebenen Ausführungsbeispielen könnte die zwischen der Anpreßplatte 14 und der Mitnehmerscheibe 22 angeordnete Getriebekette mit eingeschränktem translatorischen Freiheitsgrad sowohl elastische als auch starre Verbindungselemente enthalten, d. h. die beiden Ausführungsbeispiele könnten kombiniert werden. Ferner ist es auch möglich, den Außenring des Wälzlagers 30 an der Anpreßplatte 14 zu befestigen und die elastischen Verbindungsteile 32 bzw. die Winkel 34 am Innenring des Wälzlagers 30 zu befestigen. Ein solches Wälzlager wäre aber wegen des größeren Durchmessers teurer.

Für den Fachmann ist erkennbar, daß sich der erfinderische Grundgedanke nicht nur bei einer Einscheibenkupplung, sondern auch bei einer Mehrscheibenkupplung verwirklichen läßt.

## Patentansprüche

1. Ein- oder Mehrscheibenkupplung für Schaltgetriebe, umfassend einen mit dem Schwungrad (12) eines Verbrennungsmotors drehfest verbundenen Kupplungskorb (10), eine mit dem Kupplungskorb (10) drehfest, aber begrenzt axial beweglich verbundene Anpressplatte (14) und eine Mitnehmerscheibe (22) mit einer Mitnehmernabe (24), die mit der zum Schwungrad (12) koaxialen Getriebeeingangswelle (26) drehfest, aber begrenzt axial verschiebbar verbunden ist, und mit einem beidseitig mit Reibbelägen versehenen äußeren Umfangsbereich, der zwischen der Anpressplatte (14) und dem Schwungrad (12) angeordnet ist, wobei die Anpressplatte (14) und die Mitnehmerscheibe (22) über eine Getriebekette (32; 34-38) mit eingeschränktem axialen translatorischen Freiheitsgrad miteinander verbunden sind, derart, dass die Axialbewegung der Mitnehmerscheibe (22) größer ist als der axiale Federweg der Reibbeläge, aber kleiner ist als die Axialbewegung der Anpressplatte (14), und wobei die Getriebekette ein Drehlager (30) enthält, **dadurch gekennzeichnet, dass** der Innenring des Drehlagers (30) auf der Mitnehmernabe (24) fixiert ist, und dass der Außenring des Drehlagers über Verbindungselemente (32, 34) mit der Anpressplatte (14) verbunden ist, wobei die Verbindungselemente entweder in Axialrichtung elastisch verformbar sind oder starr ausgebildet und über eine Langlochverbindung (36, 38) mit der Anpressplatte (14) verbunden sind.

## Claims

1. A single or multiple-disc clutch for gear-shift mechanisms, comprising a clutch cage (10) co-rotatably connected to the flywheel (12) of an internal combustion engine, a pressure plate (14) connected co-rotatably but with limited axial mobility to the clutch cage (10) and a driving disc (22) with a driving collar (24) connected co-rotatably but with limited axial mobility to a gear input shaft (26) coaxial with the flywheel (12) and with an outer peripheral region provided on both sides with friction linings and disposed between the pressure plate (14) and the flywheel (12), wherein the pressure plate (14) and the driving disc (22) are so connected to one another via a gear chain (32; 34-38) with limited axial freedom of motion that the axial movement of the driving disc (22) is greater than the axial spring travel of the friction linings but less than the axial movement of the pressure plate (14), and wherein the gear chain contains a pivot bearing (30), **characterised in that** the inner race of the pivot bearing (30) is fixed on the driving collar (24) and the outer race of the pivot bearing is connected by connecting elements(32, 34) to the pressure plate (14), wherein the connecting elements are either elastically deformable in the axial direction or are rigid and connected to the pressure plate (14) by a slot connection (36, 38).

## Revendications

1. Embrayage mono ou multidisque pour boîte de vitesses, comprenant :
- une coque d'embrayage (10) solidaire en rotation du volant (12) d'un moteur à combustion interne,
- un plateau de pression (14) solidaire en rotation de la coque d'embrayage (10) mais à déplacement axial limité,
- un disque d'entraînement (22) avec un moyeu (24) qui le rend solidaire en rotation de l'arbre d'entrée (26) de la boîte de vitesses, coaxial au volant (12), mais limite son coulissement axial, et avec une zone périphérique externe placée entre le plateau de pression (14) et le volant (12), et muniedes deux côtés de garniture de friction
- étant précisé que le plateau de pression (14) et le disque d'entraînement (22) sont reliés entre eux par train d'engrenage (32 ; 34 à 38) dont le degré de liberté de translation est limité de sorte que le déplacement axial du disque d'entraînement (22) est supérieur à la course élastique axiale des garnitures de friction mais est mineur au déplacement axial du plateau de pression (14), le train d'engrenage contenant un roulement de rotation (30),
**caractérisé en ce que**
la bague interne du roulement de rotation (30) est fixée sur le moyeu d'entraînement et la bague externe du roulement de rotation est reliée au plateau de pression (14) par des éléments de liaison (32, 34) qui sont soit déformables élastiquement en direction axiale, soit rigides et reliés au plateau de pression (14) par une liaison à trou allongé (36, 38).
